# EUROPÄISCHE PATENTSCHRIFT

(11) **EP 2 097 199 B1**
(45) Veröffentlichungstag und Bekanntmachung des Hinweises auf die Patenterteilung: **26.12.2012**
(21) Anmeldenummer: 07801287.9
(22) Anmeldetag: 30.08.2007
(51) Int. Cl.: B23B 31/16, B23B 31/10

(54) **SYSTEMPENDELVORRICHTUNG UND VERFAHREN**
SYSTEM PENDULUM APPARATUS AND METHOD
DISPOSITIF PENDULAIRE ET PROCÉDÉ ASSOCIÉ

(30) Priorität: 13.09.2006 DE 102006043730
(43) Veröffentlichungstag der Anmeldung: 09.09.2009
(73) Patentinhaber: Karlein, Eugen, 97638 Mellrichstadt (DE)
(72) Erfinder: Karlein, Eugen, 97638 Mellrichstadt (DE)
(74) Vertreter: Böck, Bernhard
(86) Internationale Anmeldenummer: PCT/DE2007/001550
(87) Internationale Veröffentlichungsnummer: WO 2008/031392

(56) Entgegenhaltungen:
- DE-A1- 19 934 375
- JP-A- 11 048 012
- US-A- 5 137 287

## Beschreibung

Die Erfindung betrifft eine Systempendelvorrichtung für ein Spannfutter und ein Verfahren zum Spannen von Werkstücken mit einem Pendelelement und einem Grundelement, wobei das Pendelelement über eine Elementverbindungseinrichtung mit dem Grundelement axial verschwenkbar verbunden ist, ein Schwenkbereich α des Pendelelementes vermittels einer Begrenzungseinrichtung begrenzbar ist und das Pendelelement in eine Mittenlage des Schwenkbereiches vermittels einer Rückstelleinrichtung rückstellbar ist. Weiterhin betrifft die Erfindung ein Systempendelvorrichtungen umfassendes Spannfutter.

Systempendelvorrichtungen und Spannverfahren der eingangs genannten Art sind hinlänglich bekannt und werden zum verzugsarmen Spannen dünnwandiger Ringe, zum Beispiel Walzrohlinge zur Kugellagerherstellung, oder zum Spannen unrunder Werkstücke verwendet. Die bekannten Spannfutter verfügen allgemein über drei Pendelvorrichtungen mit jeweils zwei Spannelementen. Systempendelvorrichtungen werden vorzugsweise auch auf hydraulisch betätigten Spannfuttern eingesetzt, wobei diese Spannfutter über einen geringen Spannhub verfügen. Beim Spannen unrunder Werkstücke pendeln sich die Systempendelvorrichtungen so ein, dass die sich jeweils paarweise auf der Oberseite befindlichen Spannbacken mit nahezu gleichem Druck am Werkstück anliegen, wodurch Formabweichungen des Werkstücks reduziert werden. Auf Grund der Konstruktion der Pendelbacken ist jedoch der Durchmesserbereich zu bearbeitender Werkstücke eingeschränkt, so dass für den Spannbereich des Futters mehrere Pendelbacken verschiedener Größen benötigt werden und so eine wirtschaftliche Bearbeitung erst bei hohen Stückzahlen möglich ist.

So sind aus dem Stand der Technik Pendelspannfutter mit Systempendelvorrichtungen bekannt, bei denen die Systempendelvorrichtung über eine Drehachse mit dem Pendelspannfutter verbunden ist, wobei der Pendelhub über einen die Drehachse tangierenden Stift und kegelförmige Ausnehmungen in der Drehachse begrenzt wird. Die Systempendelvorrichtung verfügt weiter über fest an der Systempendelvorrichtung montierte Spanneinsätze, zwischen denen ein Werkstück gespannt werden kann. Eine Anpassung der Systempendelvorrichtung an unterschiedliche Werkstückdurchmesser erfolgt durch eine radiale Verstellung der Systempendelvorrichtung zu einer Werkstückdrehachse über das Pendelspannfutter. Dies schränkt den Spannbereich des Pendelspannfutters auf einen kleinen Durchmesserbereich ein. Weiter erfolgt eine Rückstellung der Systempendelvorrichtung in eine Mittenlage vermittels zweier federnder Arretierungsstifte.

Eine hierzu vergleichbare Lösung offenbart die Schrift JP 11-48012 A. Auf radial verstellbaren Backen eines Spannfutters sind jeweils Pendelträger montiert. Auf diesen sind wiederum axial schwenkbar Spannbacken angeordnet. Mittels zweiseitig exzentrisch positionierten Einstellschrauben wird die Schwenkbewegung der Spannbacke begrenzt. Wesentlich ist, dass jede Spannbacke derart geformt ist, dass diese zwei tangential beabstandete Spannflächen aufweist. Beim Spannen eines nicht exakt runden Werkstückes führt die begrenzt freie Schwenkbarkeit zu einem Ausgleich der beabstandeten Spannflächen in der Anlage am Werkstück und somit zu einer gleichmäßigen Spannkraft auf das Werkstück.

Wenngleich mit zuvor beschriebener Lösung ein Spannen von nicht exakt runden Werkstücken im Vergleich mit dem Einsatz dreier üblicher Spannbacken erheblich verbessert wird, verbleiben jedoch zwei grundlegende Nachteile. Zum Einen ist der Durchmesserbereich des Werkstücks begrenzt. Aufgrund des fixen Abstandes der beiden Spannflächen einer Spannbacke führt ein kleiner werdender Durchmesser zu einer negativen Beeinflussung zweier benachbarter Pendelbacken, wobei der Abstand der Spannflächen einer Spannbacke systembedingt gleichbleibend ist und der Abstand der Spannflächen benachbarter Spannbacken hingegen gegen Null wandert. Im umgekehrten Falle mit einem besonders großen Durchmesser tritt das Problem auf, dass der fixe Abstand der Spannflächen einer Spannbacke zu gering ist, um noch bei einer Rundheitsabweichung eine effektive Schwenkbewegung zu erzielen. Ebenso wie bei kleinen Durchmessern kommt es zu einer über den Werkstückumfang ungleichmäßig verteilten Krafteinleitung. Anderer Nachteil ist die Verwendbarkeit bei lediglich geringfügig unrunden Werkstücken. D.h. eine Verwendung bei deutlich von einer runden Gestalt abweichenden Werkstücken ist faktisch ausgeschlossen.

Zur Verbesserung der ersten Problematik schlägt die Schrift DE 199 34 375 A1 vor, Pendelbacken einzusetzen, welche in Stufen abgesetzt ausgeführt sind. Hierdurch wird es erreicht, dass zwei verschiedene Durchmesserbereiche unrunder Werkstücke vorteilhaft gespannt werden können.

Es ist mit zuvor beschriebenen Lösungen ausschließlich möglich, am Außenumfang eines Werkstücks zu spannen. Zum Spannen am Innenumfang zeigt die Schrift US 5,137,287 A eine vergleichbare Lösung, wobei zur Verbesserung der Anlage des Werkstücks an allen Spannflächen die zwei Spannflächen einer schwenkbar gelagerten Spannbacke drehbar gelagert sind. Hierbei ist insbesondere zunächst eine mittige Ausgangsstellung erforderlich, welche über zwei tangential angeordnete Federelemente sichergestellt wird.

Der vorliegenden Erfindung liegt die Aufgabe zugrunde, eine Systempendelvorrichtung für ein Spannfutter und ein Verfahren zum Spannen von Werkstücken vorzuschlagen, mit der bzw. dem Werkstücke innerhalb eines großen Durchmesserbereiches an Innen- sowie auch an Außendurchmessern spannbar sind, Folgebearbeitungen von Werkstücken mit dem gleichen Spannfutter möglich sind, die Systempendelvorrichtung universell an handelsüblichen Spannfuttern einsetzbar ist und insgesamt eine kostengünstige Bearbeitung von Werkstücken ermöglicht wird.

Diese Aufgabe wird durch eine Systempendelvorrichtung mit den Merkmalen des Anspruchs 1, ein Spannfutter mit den Merkmalen des Anspruchs 17 und ein Verfahren mit den Merkmalen des Anspruchs 18 gelöst.

Die erfindungsgemäße Systempendelvorrichtung für ein Spannfutter oder dergleichen weist ein Pendelelement und ein Grundelement auf, wobei das Pendelelement über eine Elementverbindungseinrichtung mit dem Grundelement axial verschwenkbar verbunden ist, ein Schwenkbereich α des Pendelelementes vermittels einer Begrenzungseinrichtung begrenzbar ist und das Pendelelement in eine Mittenlage des Schwenkbereiches α vermittels einer Rückstelleinrichtung rückstellbar ist, das Pendelelement innerhalb des Schwenkbereiches α vermittels einer Fixiereinrichtung fixierbar ist, das Grundelement vermittels einer Anschlusseinrichtung an einem Backen eines Spannfutters anschließbar ist und das Pendelelement eine Spanneinrichtung mit zwei auswechselbaren Spannelementen aufweist, die verschiebbar und fixierbar sind.

Als besonders vorteilhaft erweist es sich, dass das Grundelement vermittels einer Anschlusseinrichtung an einen Grundbacken eines herkömmlichen Spannfutters anschließbar ist. Somit ist die Systempendelvorrichtung universell auf Spannfuttern einsetzbar, ohne dass die Grundbacken des Spannfutters ausgetauscht werden müssten. Ein relativ großer Durchmesserbereich zum Spannen von Werkstücken kann durch die radiale Verstellung der Systempendelvorrichtung am Grundbacken des Spannfutters einerseits und durch die verschiebbaren und fixierbaren Spannelemente der Spanneinrichtung des Pendelelementes realisiert werden.

In einer vorteilhaften Ausführungsform weist die Elementverbindungseinrichtung ein Drehlager auf. Das Drehlager ermöglicht eine Verschwenkung des Pendelelementes relativ zum Grundelement, so dass sich das Pendelelement entsprechend der Oberfläche eines Werkstückes zum gleichmäßigen Spannen desselben ausrichten kann.

Als besonders vorteilhaft erweist es sich, wenn das Drehlager aus einem Bolzen gebildet ist. Ein Bolzen ermöglicht eine einfache Ausbildung einer Schwenkachse zwischen dem Pendelelement und dem Grundelement.

In einer weiteren Ausführungsform kann das Drehlager aus dem Pendelelement und dem Grundelement gebildet sein. So können am Pendelelement und am Grundelement komplementäre Innen- bzw. Außendurchmesser ausgebildet sein, die ineinander einsetzbar sind und somit das Pendelelement mit dem Grundelement verschwenkbar verbinden.

Weiter erweist es sich als besonders vorteilhaft, wenn eine Koppeleinrichtung das Pendelelement mit dem Grundelement formschlüssig verbindet. Die Koppeleinrichtung verhindert ein Auseinanderfallen von Pendelelement und Grundelement und stellt eine den bei der Werkstückbearbeitung auftretenden Kräften widerstehende Verbindung beider Elemente sicher.

In einer Ausführungsform der Koppeleinrichtung ist diese als ein am Pendelelement befestigter Lagerring ausgebildet. Ein Lagerring ermöglicht in geeigneter Weise die Aufnahme von Kräften und die Ausbildung einer weitestgehend spielfreien Schwenkverbindung zwischen Pendelelement und Grundelement.

Eine selbsttätige Rückstellung einer Pendelbewegung des Pendelelementes gegenüber dem Grundelement wird ermöglicht, wenn die Rückstelleinrichtung zwischen dem Lagerring und dem Grundelement gebildet ist.

Als besonders vorteilhaft erweist es sich, wenn die Rückstelleinrichtung eine Federrasteinrichtung mit einem Rastglied aufweist, welches in eine zur Mittenlage des Pendelelementes hin vertiefte Rastausnehmung eingreift. Somit kann das Pendelelement nach Entnahme eines Werkstücks automatisch in die Mittenlage zurück schwenken. Auch wird das Einlegen und Spannen eines Werkstücks, von der Mittenlage der Pendelelemente ausgehend, erleichtert.

Um eine Verschwenkung des Pendelelementes aus einer Mittenlage während des Spannens eines Werkstückes zu verhindern, ist es vorteilhaft, wenn die Fixiereinrichtung eine Schraubenverbindung zur drehfesten Fixierung des Pendelelementes mit dem Grundelement aufweist.

In einer Ausführungsform weist die Fixiereinrichtung eine Arretiereinrichtung zur drehfesten Arretierung des Pendelelementes in der Mittenlage des Schwenkbereiches auf. So ist eine Mittenlage des Pendelelements einfach arretierbar, so dass zum Beispiel Folgearbeiten, wie das Umspannen auf einen bereits bearbeiteten Durchmesser des Werkstücks, ohne lange Einstellzeiten oder den Wechsel eines Spannfutters ausführbar sind.

Ist die Arretiereinrichtung als Stiftverbindung ausgebildet, kann die Mittenlage des Pendelelementes durch eine einfache, formschlüssige Stiftverbindung fixiert werden. Auch kann in einer weiteren Ausführungsform die Arretiereinrichtung als Passschraubenverbindung ausgebildet sein. Das Pendelelement kann so gleichzeitig arretiert und fixiert werden.

Als vorteilhaft erweist es sich, wenn die Spanneinrichtung des Pendelelementes zwei radial zur Spannfutterdrehachse ausgerichtete Führungsnuten am jeweils äußeren Randbereich des Pendelelementes zur Führung der Spannelemente aufweist. Wenn die Führungsnuten in einer Relativanordnung von zum Beispiel 60° zueinander angeordnet sind und das Pendelelement derart auf dem Grundbacken montiert ist, dass die Mittelachsen der Führungsnuten die Drehachse des Futters schneiden, lässt sich durch eine insgesamt durchmessergleiche Fixierung der Spannelemente an den Führungsnuten ein Werkstück innerhalb eines relativ großen Durchmesserbereichs spannen. Da die Spannelemente dementsprechend fixiert werden können, befinden sich auf der dem Werkstück zugewandten Seite des Systempendelelementes keine beweglichen Bauteile. Störungen durch Verschmutzungen während des Betriebes sind daher im Wesentlichen ausgeschlossen.

Von besonderem Vorteil ist es, wenn die Führungsnuten eine Rastverzahnung zur Verrastung der als Spannbacken mit übereinstimmender Rastverzahnung ausgebildeten Spannelemente aufweisen. So sind alle Spannelemente einer Systempendelvorrichtung insgesamt durchmessergleich montierbar, ohne dass eine zeitaufwendige Relativeinstellung der Spannelemente vorgenommen werden müsste. Auch können die Spannbacken durch De- und Remontage um 180° gedreht werden, so dass ein Werkstück an einem Innen- wie auch einem Außendurchmesser gespannt werden kann.

In einer Ausführungsform weist die Begrenzungseinrichtung eine Stiftverbindung mit einem freien Ende eines Stiftes auf, dessen Bewegungsbereich durch eine Innenwandung einer Ausnehmung begrenzt wird. Die Innenwandung der Ausnehmung dient somit als Anschlag für den Stift und begrenzt den Schwenkbereich α des Pendelelementes relativ zum Grundelement innerhalb eines zum Spannen von Werkstücken sinnvollen Winkelabstands.

Weist die Anschlusseinrichtung zum Anschluss des Grundelementes an einen Grundbacken eines Spannfutters eine Schrauben-Nutensteinverbindung zur Verschiebung und Fixierung des Grundelementes am Grundbacken auf, kann die Systempendelvorrichtung an Grundbacken herkömmlicher Spannfutter, ohne dass ein Austausch der Grundbacken der Spannfutter notwendig wäre, montiert werden.

Als besonders vorteilhaft erweist es sich, wenn das Pendelelement zumindest eine in axialer Richtung verstellbare Anlagefläche zur Anlage eines Werkstücks aufweist. So ist eine Einstellung der Anlagefläche als Werkstückanschlag möglich.

Das erfindungsgemäße Spannfutter zum Spannen von Werkstücken oder dergleichen umfasst zumindest drei Systempendelvorrichtungen, wobei die Systempendelvorrichtungen jeweils vermittels einer Anschlusseinrichtung an Backen des Spannfutters verschiebbar und fixierbar sind. So ergibt sich eine einfache Einstellung der Systempendelvorrichtungen auf eine Drehachse des Spannfutters und auf unterschiedliche Durchmesser von Werkstücken, wobei ein Spannen des Werkstücks vermittels der bewegbaren Grundbacken des Spannfutters und den daran befestigten Systempendelvorrichtungen erfolgt.

Bei dem erfindungsgemäßen Verfahren zum Spannen von Werkstücken wird zum Spannen eines Werkstücks ein Spannfutter mit zumindest drei Systempendelvorrichtungen verwendet.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügte Zeichnung näher erläutert.

Es zeigen:
- **Fig. 1:**: eine unterbrochene Draufsicht eines Spannfutters mit Systempendelvorrichtungen in Richtung der Drehachse;
- **Fig. 2:**: eine Schnittansicht einer Systempendelvorrichtung mit einem Teilausschnitt des Spannfutters entlang einer Linie II - II aus **Fig. 1****;**
- **Fig. 3:**: einen Halbschnitt der Systempendelvorrichtung mit einem Teilausschnitt des Spannfutters entlang einer Linie III - III aus **Fig. 4****;**
- **Fig. 4:**: eine Schnittansicht der Systempendelvorrichtung entlang einer Linie IV - IV aus **Fig. 3****.**

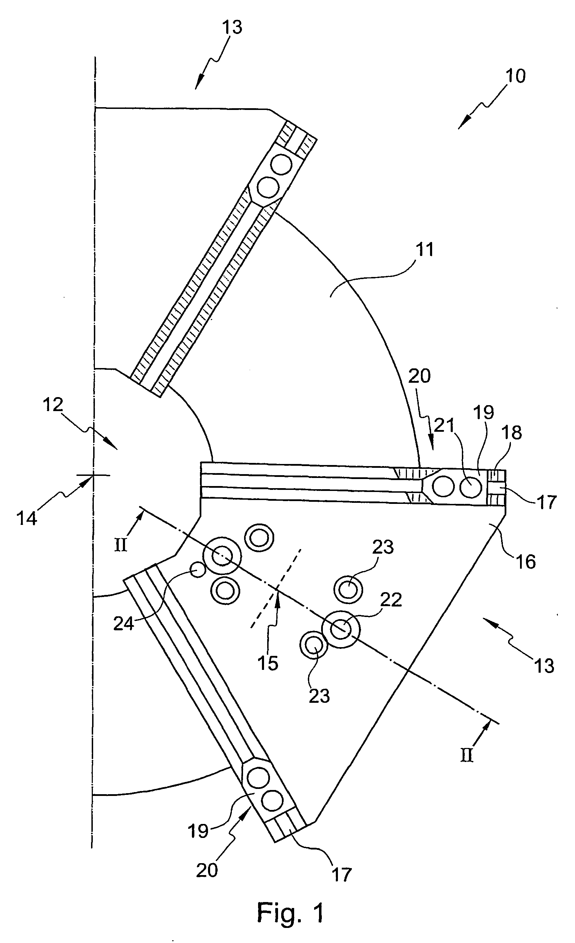

**Fig. 1** zeigt ein Spannfutter 10 mit einem Spannfuttergehäuse 11 und einer Durchgangsöffnung 12 zur Durchführung von Werkstücken sowie Systempendelvorrichtungen 13, welche auf in dieser Ansicht nicht sichtbaren Grundbacken 25 im Spannfuttergehäuse 11 befestigt sind. Die Systempendelvorrichtungen 13 sind relativ zu einer Drehachse 14 des Spannfutters 10 ausgerichtet, durch die Grundbacken 25 des Spannfutters 10 in radialer Richtung linear bewegbar und ihrerseits um eine Schwenkachse 15 verschwenkbar. Ein Pendelelement 16 einer der Systempendelvorrichtungen 13 verfügt über zwei Führungsnuten 17, welche am Pendelelement 16 in radialer Richtung zur Drehachse 14 ausgebildet sind. Die Führungsnuten 17 weisen eine andeutungsweise dargestellte Rastverzahnung 18 auf, in die jeweils ein als Spannbacken 19 ausgebildetes Spannelement 20 mit einer übereinstimmend ausgebildeten Rastverzahnung eingesetzt ist. Die Spannbacken 19 sind vermittels Schrauben 21 und hier nicht dargestellten Nutensteinen in der Führungsnut 17 befestigt. Die Spannbacken 19 sind so einfach auf einen einheitlichen Durchmesser einstellbar und können durch De- und Remontage um 180° gedreht werden, so dass ein Innen- wie auch ein Außendurchmesser eines Werkstücks mit dem Spannfutter 10 spannbar sind. Die Montage der Systempendelvorrichtung 13 auf dem hier nicht sichtbaren Grundbacken 25 des Spannfutters 10 erfolgt vermittels Schrauben 22. Eine Mittenlage des Pendelelementes 16 kann vermittels Schrauben 23 fixiert werden. Die in der **Fig. 1** dargestellte Mittenlage der Systempendelvorrichtung 13 ist zusätzlich durch einen Stift 24 arretierbar.

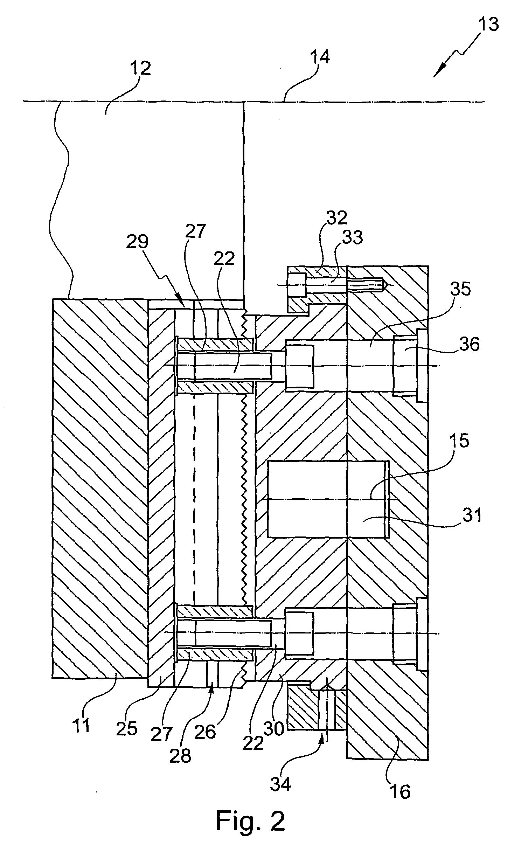

Eine Schnittansicht der Systempendelvorrichtung 13 entlang einer Linie II - II aus **Fig. 1** zeigt **Fig. 2****.** Hier ist ersichtlich, dass die Systempendelvorrichtung 13 auf dem Grundbacken 25 mit einer Rastverzahnung 26 aufgesetzt und über Nutensteine 27 in einer Nut 28 des Grundbackens 25 mit den Schrauben 22 befestigt ist. Der Grundbacken 25 ist wiederum in einer Nut 29 des Spannfuttergehäuses 11 linear beweglich aufgenommen. Die Systempendelvorrichtung 13 ist weiter aus einem Grundelement 30 und dem Pendelelement 16 zusammengesetzt, wobei das Pendelelement 16 mit dem Grundelement 30 über einen Bolzen 31 um die Schwenkachse 15 drehbar verbunden ist und, über einen Ring 32 gesichert, weitestgehend ohne Axialspiel am Grundelement 30 anliegt. Der Ring 32 ist über Schrauben 33 mit dem Pendelelement 16 verbunden. Weiter ist im Ring 32 eine Federrasteinrichtung 34 eingeschraubt. Das Pendelelement 16 und das Grundelement 30 sind mit Durchgangsöffnungen 35 versehen, in die die Schrauben 22 einsetzbar sind. Zur Vermeidung von Verschmutzungen sind die Durchgangsöffnungen 35 mit Verschlusskappen 36 abgedichtet.

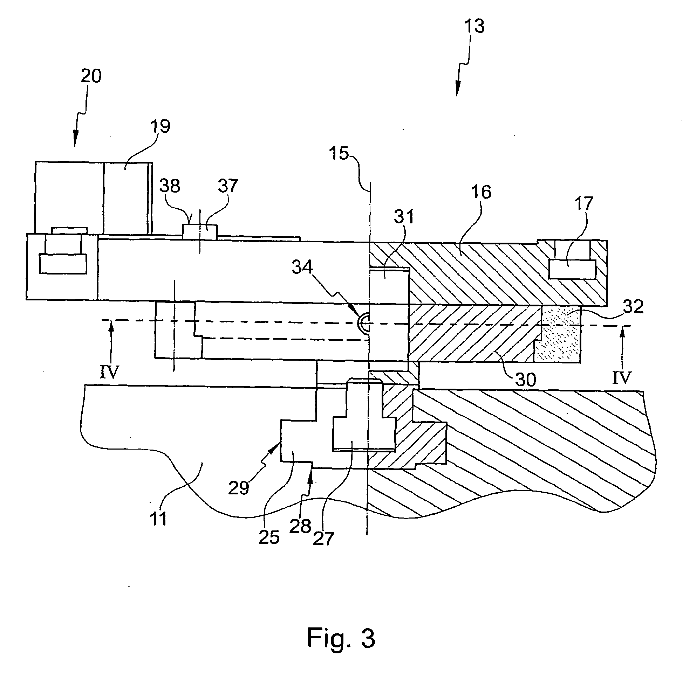

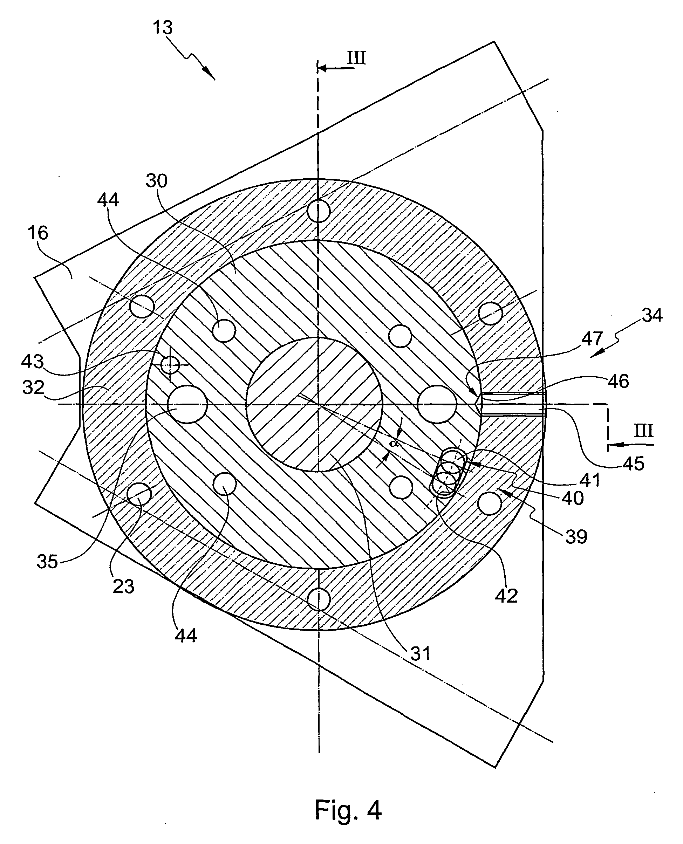

Einen Halbschnitt der Systempendelvorrichtung 13 entlang einer Linie III - III aus **Fig. 4** zeigt **Fig. 3****.** Im Pendelelement 16 ist eine Schraube 37 mit einer Anschlagfläche 38 eingesetzt. Die Anschlagfläche 38 dient zur Anlage von mit der Systempendelvorrichtung 13 spannbaren Werkstücken, wobei der Abstand der Anschlagfläche 38 zum Pendelelement 16 vermittels der Schraube 37 einstellbar ist. Bei der Verwendung von drei Systempendelvorrichtungen 13 können Werkstücke an drei Auflagepunkten ebenengleich zur Anlage gebracht werden.

**Fig. 4** zeigt eine Schnittansicht entlang einer Linie IV - IV aus **Fig. 3****.** Der Ring 32 umschließt das Grundelement 30 vollständig und ist über die Schrauben 33 mit dem Pendelelement 16 verbunden. Im Grundelement 30 ist der Bolzen 31 als Schwenkachse 15 eingesetzt, und ein Schwenkbereich α des Pendelelementes 16 zum Grundelement 30 ist durch eine Begrenzungseinrichtung 39 begrenzt. Die Begrenzungseinrichtung 39 weist eine Ausnehmung 40 im Grundelement 30 auf und einen Stift 41, der im Pendelelement 16 befestigt und in der Ausnehmung 40 bewegbar ist. Durch Anlage des Stiftes 41 an einer Innenwandung 42 der Ausnehmung 40 wird der Schwenkbereich α des Pendelelementes 16 begrenzt. Weiter sind im Grundelement 30 eine Bohrung 43 für den Stift 24 zur Arretierung der Mittenlage des Pendelelementes 16 und Gewindebohrungen 44 zum Einschrauben der Schrauben 23 vorgesehen. Somit ist eine Befestigung des Pendelelementes 16 auf dem Grundelement 30 in einer Mittenlage einfach möglich. Im Ring 32 ist die Federrasteinrichtung 34 als Schraube 45 mit einem Rastglied 46 eingesetzt, wobei das Rastglied 46 in eine zur Mittenlage des Pendelelements 16 hin vertiefte Ausnehmung 47 im Grundelement 30 eingreift.

## Patentansprüche

1. Systempendelvorrichtung (13) für ein Spannfutter oder dergleichen mit einem Pendelelement (16) und einem Grundelement (30), wobei das Pendelelement über eine Elementverbindungseinrichtung mit dem Grundelement axial verschwenkbar verbunden ist, ein Schwenkbereich α des Pendelelementes vermittels einer Begrenzungseinrichtung (39) begrenzbar ist, das Grundelement vermittels einer Anschlusseinrichtung an einen Backen (25) eines Spannfutters (10) anschließbar ist und das Pendelelement in eine Mittenlage des Schwenkbereiches vermittels einer Rückstelleinrichtung rückstellbar ist,
**dadurch gekennzeichnet,**
**dass** das Pendelelement innerhalb des Schwenkbereiches α vermittels einer Fixiereinrichtung (23) fixierbar ist, und das Pendelelement eine Spanneinrichtung mit zwei auswechselbaren Spannelementen (20) aufweist, die verschiebbar und fixierbar sind.

2. Systempendelvorrichtung nach Anspruch 1,
**dadurch gekennzeichnet,**
**dass** die Elementverbindungseinrichtung ein Drehlager aufweist.

3. Systempendelvorrichtung nach Anspruch 2,
**dadurch gekennzeichnet,**
**dass** das Drehlager aus einem Bolzen (31) gebildet ist.

4. Systempendelvorrichtung nach Anspruch 2,
**dadurch gekennzeichnet,**
**dass** das Drehlager aus dem Pendelelement und dem Grundelement gebildet ist.

5. Systempendelvorrichtung nach einem der vorangehenden Ansprüche,
**dadurch gekennzeichnet,**
**dass** eine Koppeleinrichtung das Pendelelement mit dem Grundelement formschlüssig verbindet.

6. Systempendelvorrichtung nach Anspruch 5,
**dadurch gekennzeichnet,**
**dass** die Koppeleinrichtung als ein am Pendelelement befestigter Lagerring (32) ausgebildet ist.

7. Systempendelvorrichtung nach Anspruch 6,
**dadurch gekennzeichnet,**
**dass** die Rückstelleinrichtung zwischen dem Lagerring und dem Grundelement gebildet ist.

8. Systempendelvorrichtung nach einem der vorangehenden Ansprüche,
**dadurch gekennzeichnet,**
**dass** die Rückstelleinrichtung eine Federrasteinrichtung (34) mit einem Rastglied (46) aufweist, das in eine zur Mittenlage hin vertiefte Rastausnehmung (47) eingreift.

9. Systempendelvorrichtung nach einem der vorangehenden Ansprüche,
**dadurch gekennzeichnet,**
**dass** die Fixiereinrichtung eine Schraubenverbindung (23) zur drehfesten Fixierung des Pendelelementes mit dem Grundelement aufweist.

10. Systempendelvorrichtung nach einem der vorangehenden Ansprüche,
**dadurch gekennzeichnet,**
**dass** die Fixiereinrichtung eine Arretiereinrichtung zur drehfesten Arretierung des Pendelelementes in der Mittenlage des Schwenkbereiches aufweist.

11. Systempendelvorrichtung nach Anspruch 10,
**dadurch gekennzeichnet,**
**dass** die Arretiereinrichtung als Stiftverbindung (24) ausgebildet ist.

12. Systempendelvorrichtung nach einem der vorangehenden Ansprüche,
**dadurch gekennzeichnet,**
**dass** die Spanneinrichtung des Pendelelementes zwei radial ausgerichtete Führungsnuten (17) am jeweils äußeren Randbereich des Pendelelementes zur Führung der Spannelemente aufweist.

13. Systempendelvorrichtung nach Anspruch 12,
**dadurch gekennzeichnet,**
**dass** die Führungsnuten eine Rastverzahnung (18) zur Verrastung der als Spannbacken (19) mit übereinstimmender Rastverzahnung ausgebildeten Spannelemente aufweisen.

14. Systempendelvorrichtung nach einem der vorangehenden Ansprüche,
**dadurch gekennzeichnet,**
**dass** die Begrenzungseinrichtung eine Stiftverbindung mit einem freien Ende eines Stiftes (41) aufweist, dessen Bewegungsbereich durch eine Innenwandung (42) einer Ausnehmung (40) begrenzt wird.

15. Systempendelvorrichtung nach einem der vorangehenden Ansprüche,
**dadurch gekennzeichnet,**
**dass** die Anschlusseinrichtung zum Anschluss des Grundelementes an einen Backen eines Spannfutters eine Schrauben-Nutenstein-Verbindung zur Verschiebung und Fixierung des Grundelementes am Backen aufweist.

16. Systempendelvorrichtung nach einem der vorangehenden Ansprüche,
**dadurch gekennzeichnet,**
**dass** das Pendelelement zumindest eine in axialer Richtung verstellbare Anlagefläche (38) zur Anlage eines Werkstücks aufweist.

17. Spannfutter (10) zum Spannen von Werkstücken oder dergleichen, umfassend zumindest drei Systempendelvorrichtungen (13) nach einem der vorangehenden Ansprüche,
**dadurch gekennzeichnet,**
**dass** die Systempendelvorrichtungen jeweils vermittels einer Anschlusseinrichtung an Backen (25) des Spannfutters verschiebbar und fixierbar sind.

18. Verfahren zum Spannen von Werkstücken oder dergleichen,
**dadurch gekennzeichnet,**
**dass** zum Spannen eines Werkstückes ein Spannfutter (10) mit zumindest drei Systempendelvorrichtungen (13) nach einem der Ansprüche 1 bis 16 verwendet wird.

## Claims

1. System pendulum apparatus (13) for a chuck or the like with a pendulum element (16) and a basal element (30), wherein there is an axially swivelable connection between the pendulum element and the basal element by way of an element connection device, a swivel range α of the pendulum element can be restricted by means of a restriction device (39), the basal element can be joined by means of a joining device to one jaw (25) of a chuck (10), and the pendulum element can be returned by means of a return device to a central position of the swivel range,
**characterized in that**
the pendulum element can be fixed within the swivel range α by means of a fixing device (23), and the pendulum element has a clamping device with two exchangeable clamping elements (20), which are slidable and fixable.

2. System pendulum apparatus according to Claim 1,
**characterized in that**
the element connection device has a pivot bearing.

3. System pendulum apparatus according to Claim 2,
**characterized in that**
the pivot bearing is formed of a bolt (31).

4. System pendulum apparatus according to Claim 2,
**characterized in that**
the pivot bearing is formed of the pendulum element and the basal element.

5. System pendulum apparatus according to any of the preceding Claims,
**characterized in that**
the pendulum element is positively fitted to the basal element by means of a coupling device.

6. System pendulum apparatus according to Claim 5,
**characterized in that**
the coupling device is formed as a bearing ring (32), which is fixed to the pendulum element.

7. System pendulum apparatus according to Claim 6,
**characterized in that**
the return device is formed between the bearing ring and the basal element.

8. System pendulum apparatus according to any of the preceding Claims,
**characterized in that**
the return device has a spring detent arrangement (34) with a detent element (46), which engages into a detent recess (47) running with increasing depth in the direction of the central position.

9. System pendulum apparatus according to any of the preceding Claims,
**characterized in that**
the fixing device has a screw connection (23) for fastening the pendulum element to the basal element in a rotationally fixed manner.

10. System pendulum apparatus according to any of the preceding Claims,
**characterized in that**
the fixing device has an arresting device for arresting the pendulum element in the central position of the swivel range in a rotationally fixed manner.

11. System pendulum apparatus according to Claim 10,
**characterized in that**
the arresting device is formed as a pin connection (24).

12. System pendulum apparatus according to any of the preceding Claims,
**characterized in that**
the clamping device of the pendulum element has two radially oriented guide grooves (17), which are each disposed on the outer edge area of the pendulum element to guide the clamping elements.

13. System pendulum apparatus according to Claim 12,
**characterized in that**
the guide grooves have a detent toothing (18) for meshing of the clamping elements being formed as clamping jaws (19) having correspondingly formed detent toothing.

14. System pendulum apparatus according to any of the preceding Claims,
**characterized in that**
the restriction device has a pin connection established to one free end of a pin (41), which has a range of movement that is restricted by an internal wall (42) of a recess (40).

15. System pendulum apparatus according to any of the preceding Claims,
**characterized in that**
the joining device for joining the basal element to one jaw of a chuck has a screw-sliding block connection for sliding and fixing of the basal element at the jaw.

16. System pendulum apparatus according to any of the preceding Claims,
**characterized in that**
the pendulum element has at least one abutting surface (38) that is adjustable in axial direction for abutting a workpiece.

17. Chuck (10) for clamping of workpieces or the like, comprising at least three system pendulum apparatuses (13) according to any of the preceding Claims,
**characterized in that**
the system pendulum apparatuses are each slidable and fixable by means of a joining device at jaws (25) of the chuck.

18. Method for clamping of workpieces or the like,
**characterized in that**
for clamping of a workpiece a chuck (10) having at least three system pendulum apparatuses (13) according to any of Claims 1 to 16 is used.

## Revendications

1. Dispositif pendulaire (13) pour un mandrin ou autres avec un élément pendulaire (16) et un élément basal (30), dans lequel l'élément pendulaire est connecté de manière à être axialement pivotable à l'élément basal par un dispositif de connexion d'éléments, une zone de pivotement α est limitable par un dispositif de limitation (39), l'élément basal peut être connecté à un mors (25) d'un mandrin (10) par un dispositif de connexion et l'élément pendulaire peut être repositionné à une position centrale de la zone de pivotement par un dispositif de repositionnement,
**caractérisé en ce que**
l'élément pendulaire est fixable dans la zone de pivotement α par un dispositif de fixation (23) et l'élément pendulaire comprend un dispositif de serrage avec deux éléments de serrage (20) échangeables qui peuvent être glissés et fixés.

2. Dispositif pendulaire selon la revendication 1,
**caractérisé en ce que**
le dispositif de connexion d'éléments comprend un palier rotatif.

3. Dispositif pendulaire selon la revendication 2,
**caractérisé en ce que**
le palier rotatif est formé d'un boulon (31).

4. Dispositif pendulaire selon la revendication 2,
**caractérisé en ce que**
le palier rotatif est formé de l'élément pendulaire et l'élément basal.

5. Dispositif pendulaire selon l'une quelconque des revendications précédentes,
**caractérisé en ce qu'**
un dispositif d'accouplement allie par complémentarité de forme l'élément pendulaire à l'élément basal.

6. Dispositif pendulaire selon la revendication 5,
**caractérisé en ce que**
le dispositif d'accouplement est formé comme une bague de roulement (32) attachée à l'élément pendulaire.

7. Dispositif pendulaire selon la revendication 6,
**caractérisé en ce que**
le dispositif de repositionnement est formé entre la bague de roulement et l'élément basal.

8. Dispositif pendulaire selon l'une quelconque des revendications précédentes,
**caractérisé en ce que**
le dispositif de repositionnement comprend un dispositif d'enclenchement à ressort (34) avec un élément d'enclenchement (46) qui s'encliquette dans un évidement d'enclenchement (47) qui s'approfondit vers le centre.

9. Dispositif pendulaire selon l'une quelconque des revendications précédentes,
**caractérisé en ce que**
le dispositif de fixation comprend une connexion à vis (23) pour la fixation non-tournante de l'élément pendulaire à l'élément basal.

10. Dispositif pendulaire selon l'une quelconque des revendications précédentes,
**caractérisé en ce que**
le dispositif de fixation comprend un dispositif d'arrêt pour l'arrêt non-tournant de l'élément pendulaire dans la position centrale de la zone de pivotement.

11. Dispositif pendulaire selon la revendication 10,
**caractérisé en ce que**
le dispositif d'arrêt est formé comme une connexion de broche (24).

12. Dispositif pendulaire selon l'une quelconque des revendications précédentes,
**caractérisé en ce que**
le dispositif de serrage de l'élément pendulaire comprend deux rainures de guidage (17) radialement orientées dans la zone marginale extérieure respective de l'élément pendulaire pour guider les éléments de serrage.

13. Dispositif pendulaire selon la revendication 12,
**caractérisé en ce que**
les rainures de guidage comprennent une denture d'enclenchement (18) pour l'enclenchement des éléments de serrage formés comme des mors de serrage (19) avec la denture d'enclenchement coïncidente.

14. Dispositif pendulaire selon l'une quelconque des revendications précédentes,
**caractérisé en ce que**
le dispositif de limitation comprend une connexion de broche avec une extrémité libre d'une broche (41) dont la zone de mouvement est limitée par une paroi intérieure (42) d'un évidement (40).

15. Dispositif pendulaire selon l'une quelconque des revendications précédentes,
**caractérisé en ce que**
pour connecter l'élément basal à un mors d'un mandrin le dispositif de connexion comprend une connexion à vis et bloc coulissant pour glisser et fixer l'élément basal au mors.

16. Dispositif pendulaire selon l'une quelconque des revendications précédentes,
**caractérisé en ce que**
l'élément pendulaire comprend au moins une surface de butée (38) qui peut être déplacée en une direction axiale pour buter une pièce à usiner.

17. Mandrin (10) pour le serrage de pièces à usiner ou autres, comprenant au moins trois dispositifs pendulaires (13) selon l'une quelconque des revendications précédentes,
**caractérisé en ce que**
les dispositifs pendulaires peuvent être respectivement glissés et fixés par un dispositif de connexion à des mors (25) du mandrin.

18. Procédé pour le serrage de pièces à usiner ou autres,
**caractérisée en ce que**
pour le serrage d'une pièce à usiner un mandrin (10) avec au moins trois dispositifs pendulaires (13) est utilisé selon l'une quelconque des revendications 1 à 16.
